# EUROPEAN PATENT APPLICATION

(11) **EP 3 315 545 A1**
(43) Date of publication of application: **02.05.2018**
(21) Application number: 16814712.2
(22) Date of filing: 23.06.2016
(51) Int. Cl.: C08J 7/04, C08L 79/04, C08L 33/08, C08G 18/62, C08G 18/78, C08L 75/04, C08K 3/22, C08K 3/36, C08K 3/18

(54) **HARD-COATING FILM FOR DISPLAY DEVICE, AND DISPLAY DEVICE COMPRISING SAME**

(30) Priority: 24.06.2015 WO PCT/KR2015/006439
(71) Applicant: Samsung Electronics Co., Ltd., Suwon-si, Gyeonggi-do 16677 (KR); DIC Corporation, Tokyo 174-8520 (JP)
(72) Inventor: CHOI, Hyun-Seok, Anyan -si Gyeonggi-do 14070 (KR); KANG, Young Jae, Yongin-si Gyeonggi-do 17072 (KR); LEE, Jae Jun, Suwon-si Gyeonggi-do 16699 (KR); OTAGURO, Tsuneyuki, Ichihara-shi Chiba 290-8585 (JP); WAKITA, Masanori, Ichihara-shi Chiba 290-8585 (JP)
(74) Representative: Mullen, Lee Bryan
(86) International application number: PCT/KR2016/006696
(87) International publication number: WO 2016/208999

(57) **Abstract**

Provided is a hard-coating film for a display device comprising: a plastic substrate of which the modulus of elasticity is at least 2.5 GPa and the glass transition temperature is at least 150 degrees; and a hard-coating layer provided on at least one surface of the plastic substrate, and, in the present invention, the plastic substrate has a thickness of no more than 100 µm and comprises: an active energy ray curable resin composition containing a (meth)acrylate polymer (A) having a hydroxyl group and a (meth)acryloyl group and having a weight-average molecular weight (Mw) in a range of between 3,000 to 100,000, and an isocyanate compound (B); and, optionally, nano-sized inorganic particles dispersed in the resin composition, while the hard-coating film has a pencil hardness of 4H or more as measured by ASTM D3363 under a weight of 1 kg and has a flexibility of a radius of curvature of 10 mm or less. Also provided is a display device comprising the hard-coating film.

## Description

### [Technical Field]

A hard-coating film for a display device that is usable in a display and has improved transparency, high hardness, and improved flexibility and a display device having the same are disclosed.

### [Background Art]

As a portable terminal such as a smart phone, a tablet PC, and the like is diversified, a display device is required of high performance and a high function, and thus research and development regarding this is being actively made. For example, research and development regarding commercial availability of a thin, light, and bendable or foldable, that is, flexible display device is being made. Currently, a portable display device uses a rigid glass substrate to protect a display module such as a liquid crystal layer and the like and simultaneously, prevent damage on the surface. However, the glass substrate has high hardness but may be easily broken by an external impact and easily damaged. In addition, the glass substrate does not satisfy a flexibility required for the flexible display device. Accordingly, an attempt to replace the conventional glass substrate with a hard-coating film having high hardness and excellent transparency and flexibility for a protective window in the display device is being made.

However, since a plastic film may not simultaneously satisfy mechanical properties (e.g., hardness and flexibility) and optical properties that the protective window of the display device requires, development of a hard-coating film using a material of the plastic film for protecting the display device is delayed.

A hard-coating film having one 5 to 30 µm-thick hard-coating layer (an A layer) including a radical polymerizable compound, a photoinitiator, and an inorganic particulate on one surface of a triacetyl cellulose (TAC) or polyethyleneterephthalate (PET) substrate and another 5 to 30 µm hard-coating layer (a B layer) including a radical polymerizable compound and a photoinitiator on the other surface thereof to offset a curl due to a curing contraction, wherein the A and B layers have a thickness ratio of 2.0 to 1.0 has been suggested (Japanese Patent Laid-open No. 2014-186210).

However, the hard-coating film using a composition of a multi-functional acrylate monomer and urethane acrylate as a main component or the TAC or PET substrate has relatively high pencil hardness but just endures a couple of a Mandrel test in terms of flexibility and shows no satisfactory consecutive folding durability which is important when actually used for a display device.

### [Disclosure]

### [Technical Problem]

According to an embodiment, a hard-coating film for a display device obtained by curing an active energy ray curable resin composition having high surface hardness and transparency and simultaneously, improved flexibility and a display device including the same.

### [Technical Solution]

The present inventors found that a hard-coating film including a hard-coating layer (cured film) obtained by curing an active energy ray curable resin composition including a (meth)acrylate polymer (A) having a hydroxy group and a (meth)acryloyl group and having a weight average molecular weight (Mw) of 3,000 to 100,000 (e.g., 3,000 to 60,000) and an isocyanate compound (B), on at least one surface of a plastic film substrate having elasticity of at least 2.5 GPa (e.g., at least 3.5 GPa) and a glass transition temperature of at least 150 degrees (e.g., at least 200 degrees), and having a film thickness of 5 to 60µm has high surface hardness and transparency and simultaneously, improved flexibility.

In an embodiment, a hard-coating film for a display device includes a plastic film having elasticity of 2.5 GPa and a glass transition temperature of at least 150 degrees; and a hard-coating layer provided on at least one surface of the plastic substrate,
the plastic substrate has a thickness of no more than 100 µm,
the hard-coating layer includes an active energy ray curable resin composition including a (meth)acrylate polymer (A) having a hydroxyl group and a (meth)acryloyl group and having a weight-average molecular weight (Mw) in a range of between 3,000 to 100,000, and an isocyanate compound (B); and optionally nano-sized inorganic particles dispersed in the active energy ray curable resin composition, and
the hard-coating film has a pencil hardness of at least 4H as measured by ASTM D3363 under a weight of 1 kg and the hard-coating film has flexibility of a radius of curvature of 10 mm or less.

The plastic substrate may be polyimide.

The plastic substrate may have a pencil hardness of B or more.

The plastic substrate may have a thickness of 30 µm to 100 µm.

The hard-coating layer may have a thickness of 5 µm to 100 µm.

The (meth)acrylate polymer (A) may have a weight average molecular weight of 8,000 to 60,000.

An equivalent of the (meth)acryloyl group of the (meth)acrylate polymer (A) may be 150 to 800 g/eq.

A hydroxy value of the (meth)acrylate polymer (A) may be 100 to 800 mg KOH/g.

The (meth)acrylate polymer (A) may be a polymer obtained by reacting a (meth)acrylate polymer precursor obtained by polymerizing a compound having a glycidyl group and a (meth)acryloyl group as an essential component with a compound having a carboxyl group and a (meth)acryloyl group.

The isocyanate compound (B) may include hexamethylenediisocyanate, a biuret type of hexamethylenediisocyanate, a nurate type of hexamethylenediisocyanate, an adduct of hexamethylenediisocyanate, or an allophanate type of hexamethylenediisocyanate, or a combination thereof.

In the active energy ray curable composition, a composition ratio (mole ratio) of the hydroxy group of the (meth)acrylate polymer (A) and an isocyanate group of the isocyanate compound (B) may be 1/0.05 to 1/1.40. Particularly, it may be 1/0.50 to 1/1.20 or 1/0.5 to 1/1.05.

The active energy ray curable resin composition may further include (meth)acrylate (C) in addition to the (meth)acrylate polymer (A).

The (meth)acrylate polymer (A) and the (meth)acrylate (C) may be included in a weight ratio of 60:40 to 40:60.

The isocyanate compound (B) may be included in an amount of 0.1 to 30 parts by weight based on 100 parts by weight of a sum of the (meth)acrylate polymer (A) and the (meth)acrylate (C).

The hard-coating layer may include two or more layers having the same or different compositions.

The hard-coating film for a display device may have stress energy of at least 1400kJ/m³ in a stress-strain curve measured according to ASTM D882.

The nano-sized inorganic particle may include silica, alumina, zirconia, titania, barium titanate, antimony trioxide, or a combination thereof.

The hard-coating film may have a pencil hardness of at least 7H as measured by ASTM D3363 under a weight of 1 kg and flexibility of a radius of curvature of 10 mm or less.

The hard-coating film may have a whole thickness of 250 µm or less, a total light transmittance of at least 80 % in a wavelength region of 380-780 nm, a yellow index of 5 or less, and a haze of 2 % or less.

The hard-coating film for a display device may have stress energy of at least 1500kJ/m³ in a stress-strain curve measured according to ASTM D882.

In another embodiment, a display device includes a display panel;
the hard-coating film disposed on the display panel; and
an adhesive layer coated on at least one surface of the hard-coating film.

### [Advantageous Effect]

According to an embodiment, a hard-coating film for a display device having very high surface hardness and transparency and simultaneously, improved flexibility.

### [Description of Drawings]

FIG. 1 is a schematic view showing a cross-section of a hard-coating film for a display device according to an embodiment.
FIG. 2 is a schematic view showing a cross-section of a hard-coating film for a display device according to another embodiment.
FIG. 3 is a schematic view showing a cross-section of a hard-coating film for a display device according to another embodiment.
FIG. 4 is a schematic cross-sectional view of a display device (i.e., touch screen panel) according to an embodiment.

### [Detailed Description]

Hereinafter, embodiments are described in detail. However, these embodiments are exemplary, the present invention is not limited thereto and the present invention is defined by the scope of claims.

In an embodiment, a hard-coating film for a display device includes a plastic substrate having elasticity of at least 2.5 GPa, for example, at least 3.0 GPa and a glass transition temperature of at least 150 degrees; and a hard-coating layer provided on at least one surface of the plastic substrate.

The plastic substrate has a thickness of no more than 100 µm,
the hard-coating layer includes an active energy ray curable resin composition containing a (meth)acrylate polymer (A) having a hydroxyl group and a (meth)acryloyl group and having a weight-average molecular weight (Mw) in a range of between 3,000 to 100,000, and an isocyanate compound (B); and optionally, nano-sized inorganic particles dispersed in the resin composition, and the hard-coating film has a pencil hardness of 4H or more as measured by ASTM D3363 under a weight of 1 kg and has a flexibility of a radius of curvature of 10 mm or less.

The plastic substrate may be a plastic substrate having elasticity of at least 2.5 GPa, for example, at least 3.0 GPa, or at least 3.5 GPa, and simultaneously a glass transition temperature of at least 150 degrees (e.g., of at least 250 degrees). When a hard-coating layer is disposed on the plastic substrate satisfying the above condition, high pencil hardness may be accomplished. In addition, the plastic substrate may show a total light transmittance of greater than or equal to 80 %, for example, greater than or equal to 85 % in a wavelength region of 380 to 780 nm, a yellow Index of less than or equal to 5.0, for example, less than or equal to 4.0, or less than or equal to 3.5, and a haze of less than or equal to 2.0, for example, less than or equal to 1.5. Accordingly, optical properties required as a display device may be exhibited. The plastic substrate may be a polyimide substrate. Thereby, it may realize high flexibility that requires a flexible display while having the optical properties. A thickness of the plastic film 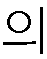 thickness may be 100 µm or less, for example, 5 µm to 80 µm, or 10 µm to 60 µm as a display material and a display device becomes a thin film.

The yellow index is obtained by a measuring method according to ASTM E313.

The plastic substrate may satisfy pencil hardness of at least B, for example a pencil hardness of B, HB, F, H, 2H, 3H, or 4H under a weight of 1 kg 4H as measured by ASTM D3363. When it has surface hardness within the ranges, a hardness of a hard-coating film for a display device may be increased.

The plastic substrate may be manufactured by a known film manufacturing process, for example including preparing a solution including a final polymer or a precursor thereof, coating the solution, and drying, curing, and optionally heat treating the same.

The active energy ray curable resin composition includes a (meth)acrylate polymer (A) having a hydroxy group and a (meth)acryloyl group in the polymer structure and having a weight average molecular weight (Mw) of 3,000 to 100,000, and an isocyanate compound (B).

The (meth)acrylate polymer (A) may have a weight average molecular weight (Mw) of 3,000 to 100,000. Within the ranges, a cross-linking density in a reaction with the isocyanate compound (B) that will be described later is appropriate and a cured hard-coating layer may exhibit improved hardness and flexibility. From a viewpoint of improvement of these effects and easy adjusting of the viscosity of the active energy ray curable resin composition so as to be desirable for coating, the weight average molecular weight (Mw) may have 8,000 to 60,000, 12,000 to 40,000, or 20,000 to 40,000.

In an embodiment, a weight average molecular weight (Mw) may be a value measured using a gel permeation chromatography (GPC) under the condition as below:
Measuring device; Tosoh Corporation HLC-8220
Column; Guard column HXL-H made by Tosoh Corporation
+ TSK gel G5000HXL made by Tosoh Corporation
+ TSKgel G4000HXL made by Tosoh Corporation
+ TSKgel G3000HXL made by Tosoh Corporation
+ TSKgel G2000HXL made by Tosoh Corporation
Detector: RI (Refractive Index) detector
Data processing: SC-8010 made by Tosoh Corporation
Measuring condition: column temperature of 40 °C
Solvent: tetrahydrofuran
Flow rate: 1.0 ml/min
Standard: polystyrene
Sample: a filtrate of 0.4 wt% tetrahydrofuran solution based on a resin solid using a micro filter (100 µl).

An equivalent of the (meth)acryloyl group of the (meth)acrylate polymer (A) may be within the range of 150 g/eq to 800 g/eq, for example, 200 g/eq to 550 g/eq, or 220 g/eq to 320 g/eq, from a viewpoint of easy obtaining of a cured film having improved flexibility while having a surface hardness.

The (meth)acrylate polymer (A) may be, for example, obtained by reacting (meth)acrylate polymer (a) obtained by polymerizing a compound (a-1) having a functional group such as a hydroxy group, a glycidyl group, a carboxyl group, and the like and a (meth)acryloyl group as an essential component, with a compound (a-2) having a functional group capable of reacting the functional group and a (meth)acryloyl group to introduce a (meth)acryloyl group into a side chain of the (meth)acrylate polymer, and simultaneously generating a hydroxy group by the reaction, or reacting a hydroxy group of a compound having a hydroxy group and a (meth)acryloyl group as a raw compound of the (meth)acrylate polymer (a) as an essential component, with a compound (a-2) to leave the hydroxy group as a functional group in the (meth)acrylate polymer (A). When the compound (a-1) has a glycidyl group as a functional group, a homopolymer of a compound having a hydroxy group and a (meth)acryloyl group, or a copolymer (hereinafter, abbreviated as "precursor (1)") of the compound and a (meth)acrylic acid ester is obtained, and precursor (1) is reacted with a compound having a (meth)acryloyl group and a carboxyl group to obtain a polymer (A-1). Herein, a compound having a glycidyl group as a raw material of the precursor (1) may be, for example, glycidyl (meth)acrylate, α-ethylglycidyl (meth)acrylate, α-n-propyl glycidyl (meth)acrylate, α-n-butyl glycidyl (meth)acrylate, 3,4-epoxy butyl (meth)acrylate, 4,5-epoxy pentyl (meth)acrylate, 6,7-epoxy pentyl (meth)acrylate, 6,7-epoxy pentyl α-ethyl (meth)acrylate, β-methyl glycidyl (meth)acrylate, 3,4-epoxy cyclohexyl (meth)acrylate, lactone modified 3,4-epoxy cyclohexyl (meth)acrylate, vinylcyclo hexeneoxide, and the like.

In an embodiment, from a viewpoint of easy adjusting an equivalent of the (meth)acryloyl group of the polymer (A) within the ranges, glycidyl (meth)acrylate, α-ethylglycidyl (meth)acrylate and α-n-propylglycidyl (meth)acrylate, for example, glycidyl (meth)acrylate or glycidyl(meth)acrylate may be used.

In order to prepare the precursor (1), a (meth)acrylic acid ester having a C1 to C22 alkyl group such as methyl (meth)acrylate, ethyl (meth)acrylate, propyl (meth)acrylate, n-butyl (meth)acrylate, t-butyl (meth)acrylate, hexyl (meth)acrylate, heptyl (meth)acrylate, octyl (meth)acrylate, nonyl(meth)acrylate, decyl (meth)acrylate, dodecyl (meth)acrylate, tetra decyl (meth)acrylate, hexa decyl (meth)acrylate, stearyl (meth)acrylate, octa decyl (meth)acrylate, dodecyl (meth)acrylate, and the like; a (meth)acrylic acid ester having an alicyclic alkyl group such as cyclohexyl (meth)acrylate, isoboronyl (meth)acrylate, dicyclopentayl (meth)acrylate, dicyclopentenyl oxyethyl (meth)acrylate, and the like; a (meth)acrylic acid ester having an aromatic ring such as benzoyloxyethyl (meth)acrylate, benzyl (meth)acrylate, phenyl ethyl (meth)acrylate, phenoxy ethyl (meth)acrylate, phenoxy diethylene glycol (meth)acrylate, 2-hydroxy-3-phenoxy propyl (meth)acrylate, and the like; hydroxy ethyl (meth)acrylate; hydroxy propyl (meth)acrylate, hydroxy butyl (meth)acrylate, (meth)acrylic acid glycerol; an acrylic acid ester having a hydroxy alkyl group such as (meth)acrylic acid ester having polyalkylene glycol group such as lactone modified hydroxy ethyl (meth)acrylate, (meth)acrylic acid polyethylene glycol, (meth)acrylic acid polypropylene glycol, and the like, which are polymerized with the compound having a glycidyl group and a (meth)acryloyl group and may be used alone or in a mixture of two or more.

In an embodiment, from a viewpoint of easy adjusting an equivalent of the (meth)acryloyl group of the polymer (A-1) within the desirable ranges and easy obtaining of a cured film (i.e., hard-coating layer) having high hardness and improved flexibility, a (meth)acrylic acid ester having a C1 to C22 alkyl group and a (meth)acrylic acid ester having an alicyclic alkyl group are preferable and among them, methyl (meth)acrylate, ethyl (meth)acrylate, propyl (meth)acrylate, n-butyl (meth)acrylate, and t-butyl (meth)acrylate may be used.

In an embodiment, from a viewpoint of easy adjusting an equivalent of the (meth)acryloyl group of the polymer (A-1) within the desirable ranges and obtaining of a cured film (e.g., a hard-coating layer) having a relatively high surface hardness and improved flexibility and curling resistance during curing, a mass ratio of a both [the compound having a glycidyl group and a (meth)acryloyl group]: [the (meth)acrylic acid ester]during copolymerization may be 15/85 to 95/5, for example, 30/70 to 90/10. In addition, from a viewpoint of obtaining an active energy ray curable resin composition having improved stability against aging, a mass ratio of the [compound having a glycidyl group and a (meth)acryloyl group]:(meth)acrylic acid ester]may be 60/40 to 90/10, for example, 80/20 to 90/10.

The precursor (1) may have an epoxy group derived from the compound having a glycidyl group and a (meth)acryloyl group. In an embodiment, an epoxy equivalent of the precursor (1) may be within the range of 145 to 900 g/eq, for example, 150 to 500 g/eq, 150 to 250 g/eq, or 150 to 180 g/eq, from a viewpoint of easy adjusting of an acryloyl equivalent and hydroxy group equivalent of finally obtained (meth)acrylate polymer (A-1) within the range of 150 to 800 g/eq.

The precursor (1) may be, for example, prepared by using the compound having a hydroxy group and a (meth)acryloyl group alone or additionally polymerizing the compound along with (meth)acrylic acid ester in a temperature range of 60 °C to 150 °C under presence of a polymerization initiator. When the precursor (1) is a copolymer, the precursor (1) may be a random copolymer, a block copolymer, or a graft copolymer but is not limited thereto. The polymerization may include a bulk polymerization, a solution polymerization, a suspension polymerization, an emulsion polymerization, and the like. In an embodiment, the polymerization may be the solution polymerization, in that the precursor (1) may be prepared and then, consecutively reacted with the compound having a carboxyl group and a (meth)acryloyl group.

The solution polymerization of preparing the precursor (1) may use a ketone solvent such as methylethylketone, methylisopropylketone, or the like, considering that the obtained (meth)acrylate polymer (A-1) has excellent dissolubility.

The polymerization initiator used for the preparation of the precursor (1) may be, for example, an azo compound such as 2,2'-azobisisobutyronitrile, 2,2'-azobis-(2,4-dimethylvaleronitrile), 2,2'-azobis-(4-methoxy-2,4-dimethylvaleronitrile), and the like; organic peroxide such as benzoylperoxide, lauroylperoxide, t-butylperoxypivalate, t-butylperoxyethylhexanolate, 1,1'-bis-(t-butylperoxy)cyclohexane, t-amylperoxy-2-ethylhexanolate, t-amylperoxy-2-ethylhexanolate, t-hexylperoxy-2-ethylhexanolate, and the like, hydrogen peroxide, and the like.

When peroxide is used as a catalyst, the peroxide along with a reducing agent may be used as a redox initiator.

The solvent used to prepare the precursor (1) in the solution polymerization may have a boiling point of greater than or equal to 80 °C with a consideration to a reaction temperature. Examples of the solvent may be a ketone solvent such as methylethyl ketone, methyl-n-propyl ketone, methyl isopropylketone, methyl-n-butyl ketone, methylisobutylketone, methyl-n-amyl ketone, methyl-n-hexyl ketone, diethyl ketone, ethyl-n-butyl ketone, di-n-propyl ketone, diisobutylketone, cyclo hexanone, and the like; an ether solvent such as n-butylether, diisoamylether, dioxane, and the like; a glycol ether solvent such as ethylene glycol monomethylether, ethylene glycol dimethylether, ethylene glycolmonoethylether, ethylene glycoldiethylether, ethylene glycol monopropylether, ethylene glycolmonoisopropylether, ethylene glycolmonobutylether, diethylene glycolmonomethylether, diethylene glycoldimethylether, diethylene glycolmonoethylether, diethylene glycoldiethylether, diethylene glycolmonoisopropylether, diethylene glycolmonobutylether, triethylene glycolmonomethylether, triethylene glycoldimethylether, propylene glycolmonomethylether, propylene glycoldimethylether, propylene glycolmonopropylether, propylene glycolmonobutylether, dipropylene glycolmonomethylether, dipropylene glycoldimethylether, and the like; an ester solvent such as n-propyl acetate, isopropyl acetate, n-butyl acetate, n-amyl acetate, ethylene glycolmonomethyl ether acetate, ethylene glycol monoethyletheracetate, diethylene glycolmonomethyl ether acetate, diethylene glycolmonoethyletheracetate, propylene glycolmonomethyl ether acetate, ethyl-3-ethoxypropionate, and the like; an alcohol solvent such as isopropyl alcohol, n-butanol, isobutanol, diacetone alcohol, 3-methoxy-1-propanol, 3-methoxy-1-butanol, 3-methyl-3-methoxybutanol, and the like; a hydrocarbon solvent such as toluene, xylene, Solvesso 100, Solvesso 150, Swasol 1800, Swasol 310, Isopar E, Isopar G, Exxon Naphtha No. 5, Exxon Naphtha No. 6, and the like. These may be used alone or in a mixture of two or more.

In an embodiment, the solvent may be a ketone solvent such as methylethylketone or methylisobutylketone, an ester solvent such as n-propyl acetate, isopropyl acetate, or n-butyl acetate, or a combination thereof because dissolution of the precursor (1) is improved and it has no reactivity with the isocyanate compound (B).

The obtained precursor (1) may subsequently react with a compound having a carboxyl group and a (meth)acryloyl group to provide a (meth)acrylate polymer (A-1). In a non-limiting embodiment, the reaction method may include polymerizing the precursor (1) using a solution polymerization, and adding the compound having a carboxyl group and a (meth)acryloyl group to the reaction system and appropriately using a catalyst such as triphenylphosphine and the like within a temperature range of 60 °C to 150 °C, but is not limited thereto. An equivalent of the (meth)acryloyl group of the (meth)acrylate polymer (A-1) may be within the range of 150 to 800 g/eq, which may be adjusted by a reaction ratio of the precursor (1) and the compound having a carboxyl group and a (meth)acryloyl group. In an embodiment, the (meth)acryloyl equivalent of the obtained (meth)acrylate polymer (A-1) may be easily adjusted within the above desired range by reacting the carboxyl group within a range of 0.8 to 1.2 mols based on 1 mol of the epoxy group of the precursor (1).

Herein, the compound having a carboxyl group and a (meth)acryloyl group may be, for example, unsaturated mono carbonic acids such as (meth)acrylic acid, (acryloyloxy)acetic acid, 2-carboxylethyl acrylate, 3-carboxylpropyl acrylate, 1-[2-(acryloyloxy)ethyl] succinate, 1-(2-acryloyloxyethyl) phthalate, hydrogen 2-(acryloyloxy)ethyl hexahydro phthalate, and a lactone modified product thereof, and the like; unsaturated dicarbonic acids such as maleic acid, and the like; a carboxyl group-containing multi-functional(meth)acrylate obtained by reacting acid anhydrides such as succinic anhydride or maleic anhydride, and the like with a hydroxy group-containing multi-functional(meth)acrylate monomer such as pentaerythritol triacrylate, and the like. These may be used alone or in a mixture of two or more. Among them, (meth)acrylic acid, (acryloyloxy) acetic acid, 2-carboxylethyl acrylate, 3-carboxyl propyl acrylate are preferable, and (meth)acrylic acid is particularly preferable from a viewpoint of easy adjusting of the equivalent of the (meth)acryloyl group of the (meth)acrylate polymer (A-1) within the preferable ranges.

The obtained (meth)acrylate polymer (A-1) has a hydroxy group produced by a reaction of an epoxy group with a carboxyl group, in its molecular structure.

The active energy ray curable resin composition may include an isocyanate compound (B). Without being bound to specific theory, when the active energy ray curable resin composition includes the isocyanate compound, the number of cross-linking points due to a reaction between a hydroxy group of the (meth)acrylate polymer (A) and an isocyanate group of the isocyanate compound (B) may be increased and thus increase surface hardness of a final hard-coating film (e.g., a hard-coating layer) and simultaneously, introduce an excellent urethane bond into tenacity of the hard-coating layer and thus improve flexibility of the final hard-coating film. Accordingly, the isocyanate compound (B) may be any compound having an isocyanate group without a particular limit. In an embodiment, the compound may be a compound having greater than or equal to two functional groups selected from isocyanate groups and acryloyl groups in one molecule in terms of further increasing cross-linking density.

Examples of the isocyanate compound (B) may be an aliphatic polyisocyanate compound such as hexamethylenediisocyanate, 2,2,4-trimethylhexanediisocyanate, 2,4,4-trimethylhexamethylenediisocyanate, lysinediisocyanatemethylester, lysinetriisocyanate, m-xylylene diisocyanate, α, α, α',α'-tetramethylxylylene diisocyanate, bis(isocyanatomethyl)naphthalene, mesitylenetriisocyanate, bis(isocyanatomethyl)sulfide, bis(isocyanatoethyl)sulfide, bis(isocyanatomethyl)disulfide, bis(isocyanatoethyl)disulfide, bis(isocyanatomethylthio)methane, bis(isocyanatoethylthio)methane, bis(isocyanatoethylthio)ethane, bis(isocyanatomethylthio)ethane, 2-acryloyloxyethyl isocyanate (tradename: Showa Denko K.K. Showa Denko K.K. ┌Karenz AOI┘, etc.), 2-methacryloyloxyethylisocyanate (tradename: Showa Denko K.K. ┌Karenz MOI┘, etc.), 1,1-bis(acryloyloxymethyl)ethylisocyanate (tradename: Showa Denko K.K. ┌Karenz BEI┘etc.), and the like; an alicyclic poly isocyanate compound such as isophoronediisocyanate, bis(isocyanatomethyl)cyclohexane, dicyclohexylmethanediisocyanate, cyclohexanediisocyanate, methylcyclohexanediisocyanate, dicyclohexyldimethylmethaneisocyanate, 2,5-bis(isocyanatomethyl)bicyclo-[2.2.1]-heptane, 2,6-bis(isocyanatomethyl)bicyclo-[2.2.1]-heptane, 3,8-bis(isocyanatomethyl)tricyclodecane, 3,9-bis(isocyanatomethyl)tricyclodecane, 4,8-bis(isocyanatomethyl)tricyclodecane, 4,9-bis(isocyanatomethyl)tricyclodecane, and the like; an aromatic polyisocyanate compound such as diphenylsulfide-4,4-diisocyanate, and the like; a heterocyclic polyisocyanate compound such as 2,5-diisocyanatothiophene, 2,5-bis(isocyanatomethyl)thiophene, 2,5-diisocyanatotetrahydrothiophene, 2,5-bis(isocyanatomethyl)tetrahydrothiophene, 3,4-bis(isocyanatomethyl)tetrahydrothiophene, 2,5-diisocyanato-1,4-dithiane, 2,5-bis(isocyanatomethyl)-1,4-dithiane, 4,5-diisocyanato-1,3-dithiolane, 4,5-bis(isocyanatomethyl)-1,3-dithiolane, and the like, and derivatives of the isocyanate compound (e.g., a biuret type, an isocyanurate type, an allophanate type, polyol adduct, and block isocyanate, and the like). These may be used alone or in a mixture of two or more.

The isocyanate compound (B) may be included in an amount of about 0.1 to 40 parts by weight based on 100 parts by weight of a curable polymer such as the (meth)acrylate polymer (A). Within the range, it may be for example included in an amount of about 0.5 to 30 parts by weight, within the range, for example about 1 to 25 parts by weight, within the range for example about 3 to 25 parts by weight, or within the range, for example about 5 to 25 parts by weight.

In an embodiment, from the viewpoint of excellent workability, no damage of transparency, and yellowness suppression of the obtained film (e.g., hard-coating layer), hexamethyleneisocyanate, a biuret type of hexamethyleneisocyanate, or a nurate type of hexamethylene isocyanate may be used.

In addition, in the present invention, from a viewpoint of an easy formulation of viscosity as a paint, good curability, and high surface hardness of the obtained film, the active energy ray curable composition may further include (meth)acrylate (C) in addition to the (meth)acrylate polymer (A). Kinds of the (meth)acrylate (C) are not particularly limited and may be for example, various (meth)acrylate monomers, and the like. Examples of the (meth)acrylate monomer (C) may be mono(meth)acrylate such as 2-hydroxyethyl(meth)acrylate, 2-hydroxypropyl(meth)acrylate, 2-hydroxybutyl(meth)acrylate, n-butyl(meth)acrylate, isobutyl(meth)acrylate, t-butyl(meth)acrylate, glycidyl(meth)acrylate, acryloylmorpholine, N-vinyl pyrrolidone, tetrahydrofurfuryl acrylate, cyclohexyl(meth)acrylate, 2-ethylhexyl(meth)acrylate, isobornyl(meth)acrylate, isodecyl(meth)acrylate, lauryl(meth)acrylate, tridecyl(meth)acrylate, cetyl(meth)acrylate, stearyl(meth)acrylate, benzyl(meth)acrylate, 2-ethoxy ethyl(meth)acrylate, 3-methoxy butyl(meth)acrylate, ethylcarbitol(meth)acrylate, phosphoric acid (meth)acrylate, ethylene oxide modified phosphoric acid (meth)acrylate, phenoxy(meth)acrylate, ethyleneoxide modified phenoxy(meth)acrylate, propylene oxide modified phenoxy(meth)acrylate, nonyl phenol(meth)acrylate, ethyleneoxide modified nonyl phenol(meth)acrylate, propylene oxide modified nonyl phenol(meth)acrylate, methoxy diethylene glycol(meth)acrylate, methoxypolyethylene glycol(meth)acrylate, methoxypropylene glycol(meth)acrylate, 2-(meth)acryloyloxyethyl-2-hydroxypropylphthalate, 2-hydroxy-3-phenoxy propyl(meth)acrylate, 2- (meth)acryloyloxyethyl hydrogel phthalate, 2-(meth)acryloyloxypropylhydrogenphthalate, 2-(meth)acryloyloxy propylhexanehydrohydrogenphthalate, 2-(meth)acryloyloxy propyltetrahydrohydrogenphthalate, dimethylaminoethyl(meth)acrylate, trifluoro ethyl(meth)acrylate, tetra fluoropropyl(meth)acrylate, hexafluoro propyl(meth)acrylate, octa fluoropropyl(meth)acrylate, octa fluoropropyl(meth)acrylate, adamantyl mono(meth)acrylate, and the like; di(meth)acrylate such as butanediol di(meth)acrylate, hexanediol di(meth)acrylate, ethoxylated hexanediol di(meth)acrylate, propoxylated hexanediol di(meth)acrylate, diethylene glycol di(meth)acrylate, polyethylene glycol di(meth)acrylate, polypropylene glycol di(meth)acrylate, neopentylglycol di(meth)acrylate, ethoxylated neopentylglycol di(meth)acrylate, hydroxy pivalic acid neopentylglycol di(meth)acrylate, and the like; trimethylolpropane tri(meth)acrylate, ethoxylated trimethylolpropane tri(meth)acrylate, propoxylated trimethylolpropane tri(meth)acrylate, tris2-hydroxyethylisocyanurate tri(meth)acrylate, glycerine tri(meth)acrylate and the like tri(meth)acrylate; and (meth)acrylate having tetra functionality or more such as pentaerythritol tri(meth)acrylate, dipentaerythritol tri(meth)acrylate, ditrimethylolpropane tri(meth)acrylate, pentaerythritol tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, dipentaerythritol hexa(meth)acrylate, ditriethylpropane hexa(meth)acrylate, and the like; and (meth)acrylate that is a part of the various multi-functional (meth)acrylate is substituted with an alkyl group, but is not limited thereto.

The (meth)acrylate compound (C) may be used alone or in a mixture of two or more.

In an embodiment, the (meth)acrylate compound (C) may be multi-functional (meth)acrylate having three or more (meth)acryloyl groups in one molecule in terms of obtaining a hard-coating layer having higher hardness. Examples of the multi-functional (meth)acrylate having three or more (meth)acryloyl groups include pentaerythritoltri(meth)acrylate, pentaerythritoltetra(meth)acrylate, dipentaerythritolpenta(meth)acrylate, and dipentaerythritolhexa(meth)acrylate.

In the active energy ray curable composition, a ratio among the (meth)acrylate polymer (A), the isocyanate compound (B), and if necessary, the (meth)acrylate (C) has no particular limit but may be appropriately set by considering hardness, flexibility, transparency or scratch resistance, and the like of a desired hard-coating layer. In an embodiment, a (mol) ratio of a hydroxy group of the (meth)acrylate polymer (A) and an isocyanate group of the isocyanate compound (B) may be in a range of 1/0.05 to 1/1.40 in order to easily obtain a hard-coating layer having particularly high surface hardness and simultaneously, sufficient flexibility. Particularly, the mol ratio may be in a range of 1/0.50 to 1/1.20, preferably, 1/0.5 to 1/1.05. A mass ratio (A)/(C) of the (meth)acrylate polymer (A) and the (meth)acrylate (C) may be in a range of 10/90 to 90/10. Particularly, the mass ratio may be in a range of 50/50 to 90/10.

For example, the isocyanate compound (B) may be included in an amount of about 0.1 to 30 parts by weight based on 100 parts by weight of a total part by weight of the (meth)acrylate polymer (A) and the (meth)acrylate (C). Within the range, the isocyanate compound (B) may be included, for example, in an amount of about 0.5 to 25 parts by weight, within the range, for example, in an amount of about 1 to 20 parts by weight, within the range, for example, in an amount of about 3 to 18 parts by weight, and within the range, for example, in an amount of about 5 to 15 parts by weight.

The above active energy ray curable composition may further include optionally an inorganic particulate (D) in order to increase a surface hardness of a hard-coating layer or a final hard-coating film or apply other performance, for example, antiblocking property and the like thereto.

A mixing ratio of the inorganic particulate (D) may be appropriately set depending on desired performance. In an embodiment, the inorganic particulate (D) may be included in a range of 30 to 100 parts by mass based on 100 parts by mass of a non-volatile portion of the active energy ray curable resin composition to obtain a hard-coating layer or a final hard-coating film having improved hardness and/or relatively high transparency. Herein, the non-volatile portion includes the (meth)acrylate polymer (A), the isocyanate compound (B), and other polymerizable compounds except for an organic solvent. When the inorganic particulate (D) is included in an amount of greater than or equal to 30 parts by mass, hardness and scratch resistance during curing may be remarkably improved. In addition, when the inorganic particulate (D) is included in an amount of less than or equal to 90 parts by mass, sufficient storage stability or transparency of the active energy ray curable resin composition may be obtained. In an embodiment, the inorganic particulate (D) may be included in a range of 40 to 80 parts by mass based on 100 parts by mass of the nonvolatile portion of the composition in terms of obtaining a resin composition having excellent storage stability and simultaneously, a cured film having high surface hardness and transparency and also, curling resistance.

In an embodiment, when an average particle diameter of the inorganic particulate (D) is measured in a dynamic light scattering method, while dispersed in the composition, the average particle diameter may be in a range of 95 to 250 nm. Within the range, a hard-coating layer or a final hard-coating film having excellent balance between surface hardness and transparency may be obtained. For example, when the inorganic particulate (D) has an average particle diameter of greater than or equal to 95 nm, the obtained hard-coating layer (or the final hard-coating film) may have much increased surface hardness. For example, when the inorganic particulate (D) has an average particle diameter of less than or equal to 250 nm, the obtained hard-coating layer (or the final hard-coating film) may show improved transparency. In an embodiment, the inorganic particulate (D) may have an average particle diameter ranging from 100 to 130 nm, in that the obtained hard-coating layer simultaneously exhibits much improved hardness and transparency.

In the present specification, the average particle diameter of the inorganic particulate (D) according to the dynamic light scattering method is measured with referrence to ┌ISO 13321┘and calculated in a Cumulant method. For example, the average particle diameter of the inorganic particulate (D) according to the dynamic light scattering method is measured by diluting the active energy ray curable resin composition with methylisobutylketone (hereinafter, MIBK) to obtain an MIBK solution having a concentration of 1.0 % and using a particle diameter-measuring device (e.g., ELSZ-2, Otsuka Electronics Co., Ltd.).

The inorganic particulate (D) may include silica, alumina, zirconia, titania, barium titanate, antimony trioxide, or a combination thereof. These may be respectively used alone or as a mixture of two or more. In an embodiment, the inorganic particulate (D) may be a silica particulate in terms of being easily obtainable and handled. The silica particulate may be, for example, wet silica and dry silica. The wet silica may be, for example, so-called precipitated silica obtained by reacting sodium silicate with an inorganic acid or gel silica. In an embodiment, the silica may be the wet silica and have an average particle diameter ranging from 95 nm to 250 nm in a dry state. Within the range, the average particle diameter of the inorganic particulate dispersed in a finally obtained resin composition may be easily adjusted into the desired range.

In an embodiment, the silica particulate may be a dry silica particulate in order to obtain a cured film having much higher surface hardness. In an embodiment, the inorganic particulate (D) may be obtained by introducing a reactive functional group onto the surface of each inorganic particulate by using a silane coupling agent. The introduction of the reactive functional group onto the surface of the inorganic particulate (D) may increase miscibility of the inorganic particulate (D) with the (meth)acrylate polymer (A) and the other organic components such as the (meth)acrylate (C) and the like and improve dispersion stability and storage stability.

The silane coupling agent may be used alone or in a mixture of two or more. In an embodiment, the silane coupling agent may be a (meth)acryloxy-based silane coupling agent, for example, 3-acryloxypropyltrimethoxysilane, 3-metacryloxypropyl trimethoxysilane, or a combination thereof in terms of excellent miscibility with an organic component and high surface hardness and excellent transparency of a cured film.

The active energy ray curable resin composition may further include a photopolymerization initiator. Examples of the photopolymerization initiator may be various benzo phenone such as benzophenone, 3,3'-dimethyl-4-methoxybenzophenone, 4,4'-bisdimethylaminebenzophenol, and the like; acyloin ether such as xanthone, thioxanthone, 2-methylthio xanthone, 2-chloro thioxanthone, and the like; α-diketones such as benzyl or diacetyl; sulfides such as tetramethly thiuram disulfide, p-tolyl disulfide, and the like;
various benzoic acids such as 4-dimethylaminebenzoic acid, 4-dimethylaminebenzoic acidethyl, and the like; and
3,3'-carbonyl-bis(7-diethyl amino)coumarin, 1-hydroxy cyclohexylphenylketone, 2,2'-dimethoxy-1,2-diphenyl ethan-1-one, 2-methyl-1-[4-(methylthio)phenyl]-2-morpholino propan-1-one, 2-benzyl-2-dimethylamino-1-(4-morpholino phenyl)-butan-1-one, 2-hydroxy-2-methyl-1-phenyl propan-1-one, 2,4,6-trimethylbenzoyldiphenylphosphineoxide, bis(2,4,6-trimethylbenzoyl)phenylphosphine oxide, 1-[4-(2-hydroxyethoxy)phenyl]-2-hydroxy-2-methyl-1-propan-1-one, 1-(4-isopropyl phenyl)-2-hydroxy-2-methyl propan-1-one, 1-(4-dodecyl phenyl)-2-hydroxy-2-methyl propan-1-one, 4-benzoyl-4'-methyldimethylsulfide, 2,2'-diethoxy acetophenone, benzyldimethylketal, benzyl-β-methoxyl ethyl acetal, o-benzoyl methyl benzoate, bis (4-dimethyl aminophenyl)ketone, p-dimethylamino acetophenone, α, α-dichloro-4-phenoxy acetophenone, pentyl-4-dimethyl aminobenzoate, a 2-(o-chlorophenyl)-4,5-diphenylimidazolyl dimer, 2,4-bis-trichloromethyl-6-[di-(ethoxycarbonylmethyl)amino]phenyl-S-triazine, 2,4-bis-trichloromethyl-6-(4-ethoxy)phenyl-S-triazine, 2,4-bis-trichloromethyl-6-(3-bromo-4-ethoxy)phenyl-S-triazine anthraquinone, 2-t-butyl anthraquinone, 2-amyl anthraquinone, β-chloro anthraquinone, and the like. The photopolymerization initiator may be used alone or in a mixture of two or more.

In an embodiment, the photopolymerization initiator may be one or more selected from 1-hydroxy cyclohexylphenylketone, 2-hydroxy-2-methyl-1-phenyl propan-1-one, 1-[4-(2-hydroxy ethoxy)phenyl]-2-hydroxy-2-methyl-1-propan-1-one, thioxanthone and thioxanthone derivative, 2,2'-dimethoxy-1,2-diphenyl ethan-1-one, 2,4,6-trimethylbenzoyldiphenylphosphineoxide, bis (2,4,6-trimethylbenzoyl)phenylphosphine oxide, 2-methyl-1-[4-(methylthio)phenyl]-2-morpholino-1-propanol, and 2-benzyl-2-dimethylamino-1-(4-morpholino phenyl)-butan-1-one. When such a photopolymerization initiator is included, the active energy ray curable composition may exhibit activity for light in a wide wavelength range and/or may exhibit improved curability.

Commercial products of the photopolymerization initiator may be ┌IRGACURE-184┘, ┌IRGACURE-149┘, ┌IRGACURE-261┘, ┌IRGACURE-369┘, ┌IRGACURE-500┘, ┌IRGACURE-651┘, ┌IRGACURE-754┘, ┌IRGACURE-784┘, ┌IRGACURE-819┘, ┌IRGACURE-907┘, ┌IRGACURE-1116┘, ┌IRGACURE-1664┘, ┌IRGACURE-1700┘, ┌IRGACURE-1800┘, ┌IRGACURE-1850┘, ┌IRGACURE-2959┘, ┌IRGACURE-4043┘, or┌DAROCUR-1173┘of Ciba Specialty Chemicals; ┌Lucirin TPO┘of BASF; ┌KAYACURE-DETX┘, ┌KAYACURE-MBP┘, ┌KAYACURE-DMBI┘, ┌KAYACURE-EPA┘, or┌KAYACURE-OA┘of Nippon Chemical Industrial Co., Ltd.; ┌ BICURE-10┘, ┌BICURE-55┘of Sutoufa Chemical; ┌trigona P1┘of Akzo; ┌SANDORAY1000┘of Sandoz; ┌DEAP┘ of APJOHN; ┌Quantacure - PDO┘of Ward Blenkinsop, ┌Quantacure-ITX┘, Quantacure-EPD┘, and the like.

The photopolymerization initiator may be used within an amount range of sufficiently initiating a photopolymerization and simultaneously, not deteriorating precipitation of a crystal or properties of a film, for example, in a range of 0.05 to 20 parts by mass, for example, 0.1 to 10 parts by mass based on 100 parts by mass of the resin composition.

In an embodiment, the active energy ray curable resin composition may further include an ultraviolet (UV) absorber, an antioxidant, a silicon-based additive, an organic bead, a fluorine-based additive, a rheology control agent, a foam-remover, a release agent, an antistatic agent, a desiccant, a colorant, an organic solvent, an inorganic filler, and the like.

In an embodiment, an activation energy ray radiated to cure the active energy ray curable resin composition and form a hard-coating layer may be, for example, ultraviolet (UV) or an electron beam but is not limited thereto. When the ultraviolet (UV) is used for the curing, an ultraviolet (UV) irradiation equipment such as an xenon lamp, a high pressure mercury lamp, a metal halide lamp, and a LED lamp as a light source is used, and if necessary, a light dose, a location of the light source, and the like may be adjusted. As for the high pressure mercury lamp, one lamp having a light dose generally ranging from 200 to 5000 mW/cm² may be used at a carrier speed ranging from 2 to 50 m/min but is not limited thereto. As for the electron beam, an electron beam accelerator having an acceleration voltage generally ranging from 10 to 300 kV may be used at a carrier speed ranging from 5 to 50 m/min but is not limited thereto.

After the curing by using the activation energy, the obtained hard-coating film may be heat-treated to promote and complete a reaction of the hydroxy group of the (meth)acrylate polymer (A) with the isocyanate compound (B). The heating may be performed at an appropriately set temperature within a range of not deteriorating optical properties, for example, in a range of 50 to 250 °C, 70 to 200 °C, or 80 to 160 °C.

The active energy ray curable composition may be coated on the above plastic substrate in an appropriate method (for example, dip coating, spin coating, spray coating, and bar coating) and then, exposed to UV light and cured to form a hard-coating layer including a cured product. A thickness of the hard-coating layer may be appropriately selected.

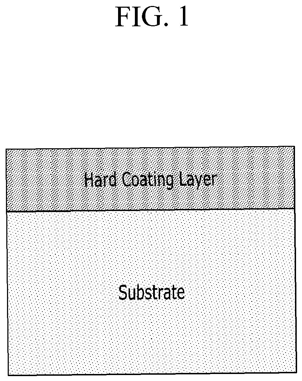

In an embodiment, a hard-coating film for a display device includes a plastic substrate and a hard-coating layer provided on at least one surface of the plastic substrate. As shown in FIGS. 1 to 3, the hard-coating layer may be disposed on one surface or both of surfaces of the plastic substrate. The hard-coating layer may include a monolayer or two or more layers having the same or different composition. When a plastic film is used instead of an inorganic material such as glass and the like to protect the surface of a flexible display and the like, the plastic substrate is provided with the hard-coating layer on the surface to improve low surface hardness of plastic.

In order to increase surface hardness of the plastic substrate up to an expected level, the hard-coating layer is required to have a predetermined thickness, but when the thickness of the hard-coating layer is increased, a curl phenomenon may be aggravated, or a wrinkle may be generated. The curl phenomenon indicates that a substrate has an undesired (unexpected) curved surface. In addition, when the thickness of the hard-coating layer is increased, the hard-coating layer may be easily cracked or peeled off while bent and also, have deteriorated flexibility. Accordingly, the thickness of the hard-coating layer may be appropriately selected in terms of curing property, a balance between hardness and flexibility, and the like. For example, the hard-coating layer may have a thickness ranging from 2 to 100 µm, preferably, 10 to 70 µm, and more preferably, 20 to 50 µm.

On the contrary, the hard-coating film for a display device according to the above embodiment may have neither curl nor wrinkle but show improved surface hardness without deteriorated flexibility. Particularly, the hard-coating layer may show high surface hardness as well as small curing contraction, and a hard-coating film including this hard-coating layer may show improved flexibility.

For example, the hard-coating film for a display device may have a pencil hardness of greater than or equal to 4H under a weight of 1 kg when measured according to ASTM D3363. Within the range, the hard-coating film 10 may have pencil hardness of greater than or equal to 5H, within the range, and for example, a hard-coating film 10 may have pencil hardness of greater than or equal to 6H within the range, specifically, greater than or equal to 7H within the range.

For example, stress energy of a stress-strain curve of the hard-coating film for a display device measured according to ASTM D882 may be greater than or equal to about 1400 kJ/m³. The stress-strain curve is a curve showing relationship between internal stress and strain when a weight is applied to the hard-coating film for a display device, and the stess energy is energy that a material absorbs before a break point during the baking strain and obtained as an area of the stress-strain curve before the break point as a parameter simultaneously considering a fracture stress and a fracture elongation. The hard-coating film for a display device may for example have stress energy of greater than or equal to about 1500 kJ/m³ within the range, within the range, for example, greater than or equal to about 1600 kJ/m³, within the range, for example, greater than or equal to about 1700 kJ/m³, and within the range, for example, greater than or equal to about 1800 kJ/m³. The hard-coating film for a display device may for example have stress energy ranging from about 1400 kJ/m³ to 5000 kJ/m³ within the range, for example from about 1600 kJ/m³ to 4500 kJ/m³ within the range, for example from about 1700 kJ/m³ to 4000 kJ/m³ within the range, for example from about 1800 kJ/m³ to 3500 kJ/m³ within the range.

For example, flexibility of the hard-coating film for a display device may be the radius of a curvature of less than or equal to about 7 mm. Within the range, the flexibility may be for example the radius of a curvature of less than or equal to about 5 mm. Within the range, the flexibility may be for example the radius of a curvature of less than or equal to about 3 mm. Herein, the flexibility may be based on a Mandrel flexibility test as a reference and evaluated from the radius of a curvature where the hard-coating film for a display device is cracked when internally folded into a circle according to JIS K 5600. In the Mandrel flexibility test, R indicates mm, for example, 3R indicates the radius of a curvature of 3 mm.

In addition, in another embodiment, a display device including the above hard-coating film is provided. The display includes a display panel;
the above hard-coating film disposed on the display panel; and
an adhesive layer provided on at least one surface of the hard-coating film.

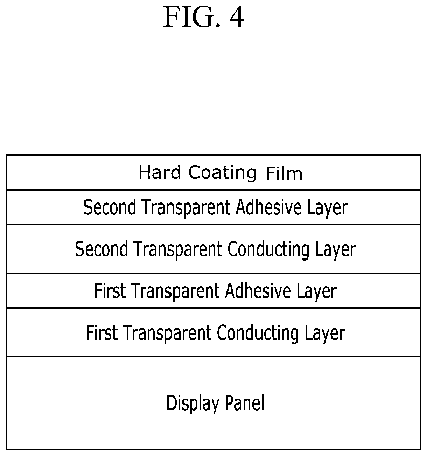

The display panel includes a liquid crystal panel, an organic light emitting panel, a plasma display panel (PDP), an electric field effect display panel, an electrophoresis display panel, and the like but is not limited thereto. The adhesive layer may include an optical clear adhesive (OCA). This optical clear adhesive (OCA) may be commercially available. In an example embodiment, the display device may include a touch screen panel (TSP). A detailed structure of the touch screen panel is notified. FIG. 4 schematically shows a simplified structure of the touch screen panel. Referring to FIG. 4, the touch screen panel may have a structure including a first transparent conducting layer, a first transparent adhesive layer, an optical adhesive film, a second transparent conducting layer, a second transparent adhesive layer, and the above hard-coating film for a display device on a display panel (for example, a LCD panel).

### [Mode for Invention]

Hereinafter, the present invention is illustrated in more detail with reference to examples. However, these examples are exemplary for the present invention and the scope of the present invention is not limited thereto.

### [Examples]

### 1. Measuring Method

### [1] Thickness Measurement

Micrometer (Mitutoyo Corporation) was used.

### [2] Pencil Hardness

A pencil scratch hardness was measured with a pencil hardness meter (an automatic pencil scratch hardness tester No. 553-M1, YASUDA SEIKI SEISAKUSHO Ltd.) and a Mitsubishi pencil according to ASTM D3363. Specifically, the highest pencil hardness was confirmed when a film was fixed on a 2 mm-thick glass plate and a pencil was moved 10 mm back and forth five times at a velocity of 60 mm/min with a vertical weight of 1 kg.

### [3] Yellow Index (YI)

It was measured using a UV spectrophotometer (Konica Minolta Inc., cm-3600d) according to ASTM E313 standard.

### [4] Modulus

A modulus was obtained by elongating a 10 mm-wide and 50 mm-long film specimen at room temperature at a speed of 50 cm /min with Instron 3365, five times measuring each sample according to ASTM D882, and averaging five measurements.

### [5] Light Transmittance and Haze

It was measured by using a UV spectrophotometer (cm-3600d, Konica Minolta Inc.).

### [6] Mandrel Flexibility Test

A radius of curvature was measured according to JIS K 5600 where a hard-coating layer was cracked when internally curved. R indicates mm, for example, 3R indicates a curvature radius of 3 mm.

### [7] Stress Energy

An area of a stress-strain curve was obtained by elongating a 10 mm-wide and 50 mm-long film specimen at a speed of 50 cm/min at room temperature with an equipment of Instron 3365 and five times measuring each sample according to ASTM D882.

### 2. Characteristic Evaluation I of Hard-Coating Film for Display Device

### Preparation Example 1: Manufacture of Polyimide Film

A polyimide (PI) substrate (50 µm thick) including a condensed/polymerized compound of 4,4-(hexafluoroisopropylidene)diphthalic anhydride (6FDA), biphenyl tetracarboxylic acid dianhydride (BPDA), and bis(trifluoromethyl)-[1,1-biphenyl]4,4-diamine (TFDB) (a mol ratio between diamine and anhydride = about 1:1, 6FDA:BPDA = 1:3) was prepared in the following method.

A 2 L 3-neck round-bottomed flask equipped with an agitator, a nitrogen inlet, a dripping funnel, a temperature controller, and a cooler as a reactor was filled with 700 g of N,N-dimethyl acetamide (DMAc), while nitrogen was passed therethrough, and cooled down to 0 °C, and then, 22.2 g (0.05 mol) of 6FDA, 44.1 g (0.15 mol) of BPDA, and 64 g (0.2 mol) of TFDB were dissolved therein. Subsequently, this solution was allowed to stand at room temperature and stirred for 24 hours. When a reaction was complete, a polyamic acid solution obtained therefrom was cast on a glass substrate with a doctor blade and dried at 40 °C for 1 hour and at 60 °C for 2 hours in a vacuum oven to obtain a self-standing film, which was heated at 80 °C for 1 hour, at 200°C for 1 hour, and at 300 °C for 30 minutes at a speed of 5 °C/min in a high temperature furnace oven to obtain a 50 µm-thick polyimide film.

The substrate had transmittance of 89 %, haze of 0.6, a yellow index of 3.2, a modulus of 4.7 Gpa, and pencil hardness (on glass, a weight of 1 kg) of HB.

### Preparation Example 2: Manufacture of Polyimide Film

A polyimide (PI) substrate (PI-2, 50 µm thick) including a condensed/polymerized compound of 4,4-(hexafluoroisopropylidene)diphthalicanhydride (6FDA), biphenyl tetracarboxylic acid dianhydride (BPDA), and bis(trifluoromethyl)-[1,1-biphenyl]4,4-diamine (TFDB) (a mol ratio of diamine and anhydride = about 1:1, 6FDA:BPDA = 4:1) was prepared according to a similar method to that of Preparation Example 1. The substrate had transmittance of 89.8 %, haze of 1.2 %, a yellow index of 1.5, a modulus of 4.2 Gpa, and pencil hardness (on glass) of B.

### Synthesis Example 1: Preparation of (Meth)acrylate Polymer (A1)

229 parts by mass of methylisobutylketone was put in a reactor equipped with an agitator, a cooling tube, a dripping funnel, and a nitrogen inlet valve and then, heated up to 110 °C while stirred, subsequently, a mixed solution of 309 parts by mass of glycidyl metaacrylate, 34 parts by mass of methyl metaacrylate, and 10 parts by mass of t-butylperoxy-2-ethylhexanoate (PerbutyleO, Japan Emulsifier Co., Ltd.) was added thereto in a dropwise fashion through the dripping funnel over three hours, and the reactor was maintained at 110 °C for 15 hours. Subsequently, the temperature of the mixed solution was decreased down to 90 °C, 0.1 parts by mass of methoquinone and 157 parts by mass of acrylic acid were put therein, 3 parts by mass of triphenylphosphine was added thereto, and the obtained mixture was heated up to 100 °C and maintained for 8 hours and then, diluted with methylisobutylketone to obtain 1000 parts by mass of a methylisobutylketone solution (50.0 mass% of a nonvolatile content) of a (meth)acrylate polymer (A1).

The (meth)acrylate polymer (A1) has the following characteristics.
Weight average molecular weight (Mw): 35,000,
Solid-based theoretical euivalent of acryloyl group: 230 g/eq, and
Hydroxyl value: 244 mg KOH/g.

### Synthesis Example 2: Preparation of (Meth)acrylate Polymer (A2)

1000 parts by mass of a methylisobutylketone solution (50.0 mass% of a nonvolatile content) of a (meth)acrylate polymer (A2) was obtained according to the same method as Synthesis Example 1 by using 283 parts by mass of methylisobutylketone, 149 parts by mass of glycidylmetaacrylate, 276 parts by mass of methylmetaacrylate, and 25 parts by mass of t-butylperoxy-2-ethylhexanoate (PerbutyleO, Japan Emulsifier Co., Ltd.) to obtain a precursor and then, immediately reacting it with 76 parts by mass of acrylic acid.

The (meth)acrylate polymer (A2) has the following characteristics.
Weight average molecular weight (Mw): 15,000,
Solid-based theoretical euivalent of acryloyl group: 478 g/eq, and
Hydroxyl value: 117 mg KOH/g.

### Combination Example 1

An active energy ray curable resin composition was prepared by mixing the (meth)acrylate polymer (A1) according to Synthesis Example 1 and other materials in each amount shown in Table 1 (a reference unit of mass).

In addition, 4 parts by mass of IRGACURE 184 as a polymerization initiator was added thereto.

The results are shown in Table 1.

### Combination Examples 2 to 9 and Comparative Combination Examples 1 to 2

The (meth)acrylate polymer (A1) and the (meth)acrylate polymer (A2) according to Synthesis Example 1 were mixed with other materials in each amount shown in Table 1 (a reference unit of mass) to prepare an active energy ray curable resin composition. On the other hand, in Combination Examples 4 to 9, an inorganic particulate (D) was added thereto, which was dispersed with a wet ball mill. The results are shown in Table 1. In addition, 4 parts by mass of IRGACURE 184 as a polymerization initiator based on 100 parts by weight of the resin composition except for silica was added thereto.

The dispersion with a wet ball mill was performed under the following conditions.
Medium: zirconia beads having a median diameter of 100 µm
Charge rate of resin composition relative to internal volume of mill: 70 volume%
Main speed of fore-end of agitator wing: 11 m/sec
Flow velocity of resin composition: 200 ml/min
Dispersion time: 60 minutes

**[Table 1]**

| Combination Examples | Acrylate polymer (A1) | Acrylate polymer (A2) | Polyisocyanate (B1) | Polyisocyanate (B2) | DPHA | Silica |
|---|---|---|---|---|---|---|
| 1 | 100 | - | 5 | - | 50 | - |
| 2 | - | 100 | 10 | - | 50 | - |
| 3 | - | 160 | - | 20 | 20 | - |
| 4 | 120 | - | 10 | - | 40 | 60 |
| 5 | 120 | - | 10 | - | 40 | 70 |
| 6 | 160 | - | - | 30 | 20 | 100 |
| 7 | - | 120 | 20 | - | 40 | 80 |
| 8 | - | 160 | - | 10 | 20 | 100 |
| 9 | 100 | - | 10 | - | 30 | 110 |
| Comparative Combination Examples | | | | | | |
| 1 | 160 | - | - | - | 20 | - |
| 2 | - | 160 | - | - | 20 | - |

The abbreviations in Table 1 are as follows:
Polyisocyanate B1: Barnock DN-980S (isocyanurate-type polyisocyanate) made by DIC Corp.
Polyisocyanate B2: Barnock DN-950 (adduct-type polyisocyanate) made by DIC Corp.
DPHA: Aronix M-404 (dipentaerythritol hexaacrylate/dipentaerythritol pentaacrylate) made by Donga Hapsung IND Co., Ltd.
Silica: ┌AEROSIL R7200┘made by Nippon Aerosil Co., Ltd. (silica particulate having a primary average particle diameter of 12 nm and a (meth)acryloyl group on the surface)

The hard-coating composition was coated on the polyimide substrate according to Preparation Example 1 or 2 and dried at 80 °C for 2 minutes to have any predetermined dry film thickness and then, exposed to UV light (a wavelength ranging from 320 to 390 nm, light intensity of 300 mJ/cm²) from a Fusion H-bulb for 1 minute in the air to form a hard-coating film having a structure shown in FIG. 1.

**[Table 2]**

| | Combination Examples | Thickness of PI substrate (µm) | Thickness of HC layer (µm) | Tr% | Haze | Y.I. | Pencil hardness | Flexibility (Mandrel Test) |
|---|---|---|---|---|---|---|---|---|
| Example 1 | 1 | PI-1 50 | 20 | 90.0 | 0.4 | 3.0 | 5H | 3R |
| Example 2 | 2 | PI-1 50 | 25 | 90.2 | 0.9 | 3.5 | 4H | 1R |
| Example 4 | 4 | PI-1 50 | 35 | 90.4 | 0.8 | 3.1 | 6H | 2R |
| Example 5 | 5 | PI-1 50 | 34 | 90.5 | 1.1 | 3.0 | 7H | 3R |
| Example 6 | 6 | PI-1 50 | 30 | 90.4 | 1.0 | 3.7 | 8H | 3R |
| Example 7 | 7 | PI-1 50 | 30 | 90.5 | 0.9 | 3.1 | 6H | 3R |
| Example 8 | 8 | PI-1 80 | 25 | 90.2 | 1.0 | 3.8 | 6H | 2R |
| Example 9 | 1 | PI-1 80 | 25 | 90.4 | 1.1 | 3.7 | 7H | 3R |
| Example 10 | 1 | PI-2 50 | 25 | 90.5 | 0.9 | 2.0 | 4H | 3R |
| Example 11 | 5 | PI-2 50 | 40 | 90.8 | 1.0 | 1.8 | 6H | 3R |
| Example 12 | 7 | PI-2 80 | 25 | 90.5 | 0.9 | 2.1 | 7H | 3R |
| Example 13 | 9 | PI-1 50 | 35 | 90.6 | 1.0 | 2.8 | 9H | 1R |
| Comparative Example 1 | 5 | PET 125 | 25 | 90.5 | 1.1 | 1.1 | 4H | 5R |
| Comparative Example 2 | Comparative Combination Example1 | PI-1 50 | 30 | 90.8 | 0.7 | 2.2 | 6H | 8R |

### 3. Characteristic Evaluation II of Hard-coating Film for Display Device

### Example 14

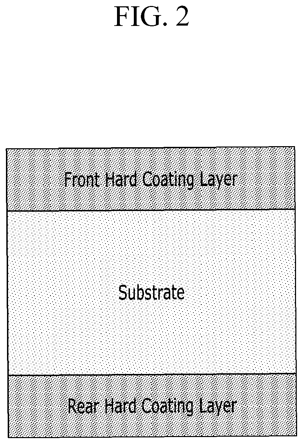

The hard-coating resin composition according to Combination Example 5 was coated to have a dry film thickness of 20 µm on one surface (a front side) of a 50 µm-thick polyimide film PI-1 and cured by UV light (a wavelength ranging from 320 to 390 nm, light intensity of 300 mJ/cm²) in the air to form a front hard-coating layer. The hard-coating resin composition according to Combination Example 2 was coated on the other surface (a rear side) of the substrate and formed into a rear hard-coating layer in the same method as above. As a result, a hard-coating film (e.g., a hard-coating film for a display device) having a structure shown in FIG. 2 was obtained.

The hard-coating layers had a total thickness of 40 µm.

A pencil hardness test and a Mandrel flexibility test of the front or rear hard-coating layer of the obtained hard-coating film were conducted. The results are shown in Table 3.

### Example 15

A hard-coating film having a structure shown in FIG. 2 was manufactured according to the same method as Example 14 except for using an 80 µm-thick polyimide film PI-1.

### Example 16

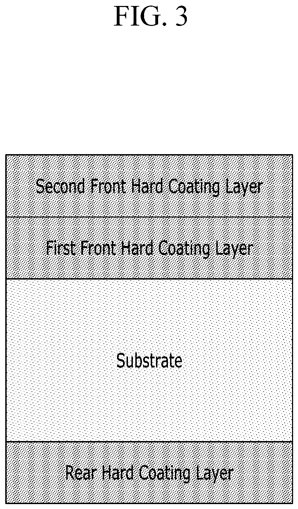

A rear hard-coating layer was formed by curing the hard-coating resin composition according to Combination Example 5 on one surface (a rear side) of a 50 µm-thick polyimide film PI-1 with UV light (a wavelength ranging from 320 to 390 nm, light intensity of 300 mJ/cm2) in the air to form a 20 µm-thick dry film. Subsequently, a first front hard-coating layer was formed on the other surface (a front side) in the same method as used for the rear hard-coating layer. In addition, on the first front hard-coating layer, a second front hard-coating layer was formed in the same method as above. As a result, a hard-coating film having a structure shown in FIG. 3 was obtained. The hard-coating layers had a total thickness of about 55 µm.

### Example 17

A hard-coating film having two front layers and one rear layer was obtained according to the same method as Example 16 except for using an 80 µm-thick polyimide film PI-1. The hard-coating layers had a total thickness of about 55 µm.

### Example 18

A hard-coating film having two front layers and one rear layer was obtained according to the same method as above except for using the composition according to Combination Example 3 to form the first front hard-coating layer. The hard-coating layers had a total thickness of about 60 µm.

### Comparative Example 4

A hard-coating film having two front layers and one rear layer was obtained according to the same method as Example 17 except for using a 125 µm PET film instead of the polyimide film. The hard-coating layers had a total thickness of 55 µm.

**[Table 3]**

| Examples | Subst rate (µm) | Rear surface (Combinat ion Example Nos.) | Front surface (Combination Example Nos.) | | Curl/ crack | P. H. (@1 kgw) | Flexibility (Mandrel) |
|---|---|---|---|---|---|---|---|
| | | | First layer | Second layer | | | |
| Example 14 | PI-1 50 | 20 (2) | 20 (5) | | None | 6H | 3R |
| Example 15 | PI-1 80 | 20 (2) | 20 (5) | | None | 7H | 3R |
| Example 16 | PI-1 50 | 20 (2) | 15 (5) | 20 (5) | None | 7H | 3R |
| Example 17 | PI-1 80 | 20 (2) | 15 (5) | 20 (5) | None | 9H | 5R |
| Example 18 | PI-1 50 | 20 (2) | 15 (3) | 20 (5) | None | 7H | 5R |
| Comparati ve Example 4 | PET 125 | 20 (2) | 15 (5) | 20 (5) | None | 4H | 8R |

Referring to Table 3, the coating on both sides suppressed a curl phenomenon. Multi-layered coating on both sides by using a composition including no silica particle but a (meth)acrylate polymer having a lower molecular weight for a rear coating maintained excellent flexibility, even though a thickness of hard-coating layers was increased.

### 4. Characteristic Evaluation III of Hard-coating Film for Display Device

### Combination Examples 10 and 11 and Comparative Combination Examples 3 to 6

The acryl polymers (A1 and A2) according to Synthesis Examples 1 and 2, polyisocyanate (B3, DIC EPN-661), polyisocyanate (B4, DIC EPN-1271), acrylate(dipentaerythritol hexaacrylate/dipentaerythritol pentaacrylate (DPHA, Aronix M-404, Donga Hapsung IND Co., Ltd), a polymerization initiator (IRGACURE184), and silica (a silica particulate having a primary average particle diameter of 12 nm and a (meth)acryloyl group on the particle surface, AEROSIL R7200, Nippon Aerosil Co., Ltd.) were mixed (based on a weight) as shown in Table 4 to prepare a composition. Herein, the silica was dispersed with a wet ball mill.

**[Table 4]**

| Combination Examples | Acrylate polymer A1 | Acrylate polymer A2 | Polyisocyanate B3 | Polyisocyanate B4 | Acrylate | Polymerization initiator | Silica |
|---|---|---|---|---|---|---|---|
| 10 | 26 | 34 | 10 | - | 40 | 5 | 70 |
| 11 | 26 | 19 | - | 10 | 55 | 5 | 70 |
| Comparative Combination Examples 3 | 26 | 34 | - | - | 40 | 5 | 70 |
| 4 | 26 | 19 | - | - | 55 | 5 | 70 |
| 5 | 26 | 4 | 10 | - | 70 | 5 | 70 |
| 6 | 26 | 4 | - | 10 | 70 | 5 | 70 |

| | | | | | | | |
|---|---|---|---|---|---|---|---|
| * unit: parts by weight | | | | | | | |

### Example 19

The composition according to Combination Example 10 was coated to have a predetermined dry film thickness on the polyimide film according to Preparation Example 2, dried at 80 °C for 5 minutes, and then, exposed to UV light (a light dose 1400 mJ/cm²) from a Fusion D-bulb for one minute and cured to manufacture a hard-coating film including an about 38 µm-thick hard-coating layer.

### Example 20

A hard-coating film was manufactured according to the same method as Example 19 except for forming an about 32 µm-thick hard-coating layer by using the composition for a hard-coating layer according to Combination Example 11 instead of the composition for a hard-coating layer according to Combination Example 10.

### Example 21

A hard-coating film was manufactured according to the same method as Example 19 except for forming an about 38 µm-thick hard-coating layer by using the composition for a hard-coating layer according to Combination Example 11 instead of the composition for a hard-coating layer according to Combination Example 10.

### Comparative Example 5

A hard-coating film was manufactured according to the same method as Example 19 except for using a polycarbonate film (pencil hardness < 3B) instead of the polyimide film according to Preparation Example 2 to form an about 35 µm-thick hard-coating layer. The polycarbonate film had a thickness of 30 µm and was 1.45 times elongated in a uniaxial direction at 130 °C (a tensile tester made by Instron Corp.).

### Comparative Example 6

A hard-coating film was manufactured according to the same method as Example 19 except for using the composition according to Combination Example 3 instead of the composition according to Combination Example 10 to form an about 32 µm-thick hard-coating layer.

### Comparative Example 7

A hard-coating film was manufactured according to the same method as Example 19 except for using the composition according to Combination Example 4 instead of the composition according to Combination Example 10 to form an about 32 µm-thick hard-coating layer.

### Comparative Example 8

A hard-coating film was manufactured according to the same method as Example 19 except for using the composition according to Combination Example 5 instead of the composition according to Combination Example 10 to form an about 38 µm-thick hard-coating layer.

### Comparative Example 9

A hard-coating film was manufactured according to the same method as Example 19 except for using the composition according to Combination Example 6 instead of the composition according to Combination Example 10 to form an about 38 µm-thick hard-coating layer.

**[Table 5]**

| | Subs trate | Hard-coating layer | | Hard-coating film | | |
|---|---|---|---|---|---|---|
| | | Combination Example | Thickne ss (µm) | Surface hardnes s | Stress energy (kJ/m³) | Flexibility |
| Example 19 | PI | Combination Example 10 | 38 | 7H | 1890±23 5 | Pass |
| Example 20 | PI | Combination Example 11 | 32 | 8H | 2012±31 0 | Pass |
| Example 21 | PI | Combination Example 11 | 38 | 8H | 1921±40 5 | Pass |
| Comparative Example 5 | PC | Combination Example 10 | 35 | 2H | 138±35 | Fail |
| Comparative Example 6 | PI | Comparative Combination Example 3 | 32 | 7H | 1346±25 | Fail |
| Comparative Example 7 | PI | Comparative Combination Example 4 | 32 | 9H | 837±119 | Fail |
| Comparative Example 8 | PI | Comparative Combination Example 5 | 38 | 8H | 557±44 | Fail |
| Comparative Example 9 | PI | Comparative Combination Example 6 | 38 | 9H | 880±87 | Fail |

| | | | | | | |
|---|---|---|---|---|---|---|
| * Flexibility: Mandrel radius 3R * Pass: no crack / Fail: crack | | | | | | |

Referring to Table 5, the hard-coating films according to Examples 19 to 21 showed sufficient flexibility as well as had high surface hardness and stress energy.

While this disclosure has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A hard-coating film for a display device, comprising
a plastic substrate having elasticity of greater than or equal to 2.5 GPa and a glass transition temperature of at least 150 degrees; and a hard-coating layer provided on at least one surface of the plastic substrate, wherein
the plastic substrate has a thickness of no more than 100 µm,
the hard-coating layer comprises an active energy ray curable resin composition containing a (meth)acrylate polymer (A) having a hydroxyl group and a (meth)acryloyl group and having a weight-average molecular weight (Mw) in a range of 3,000 to 100,000, an isocyanate compound (B); and optionally nano-sized inorganic particles dispersed in the resin composition, and
the hard-coating film has greater than or equal to 4H of pencil hardness measured by ASTM D3363 under a weight of 1 kg and flexibility of the radius of curvature of less than or equal to 10 mm.

2. The hard-coating film of claim 1, wherein the plastic substrate is polyimide.

3. The hard-coating film of claim 1, wherein a pencil hardness of the plastic substrate is B or greater.

4. The hard-coating film of claim 1, wherein a thickness of the plastic substrate is about 30 µm to about 100 µm.

5. The hard-coating film of claim 1, wherein a thickness of the hard-coating layer is about 5 µm to about 100 µm.

6. The hard-coating film of claim 1, wherein a weight average molecular weight of the (meth)acrylate polymer (A) is about 8,000 to about 60,000.

7. The hard-coating film of claim 1, wherein an equivalent of the (meth)acryloyl group of the (meth)acrylate polymer (A) is 150 to 800 g/eq.

8. The hard-coating film of claim 1, wherein a hydroxy value of the (meth)acrylate polymer (A) is 100 to 800 mg KOH/g.

9. The hard-coating film of claim 1, wherein the (meth)acrylate polymer (A) is polymer obtained by reacting a (meth)acrylate polymer precursor obtained by polymerizing a compound having a glycidyl group and a (meth)acryloyl group as an essential component with a compound having a carboxyl group and a (meth)acryloyl group.

10. The hard-coating film of claim 1, wherein the isocyanate compound (B) includes hexamethylenediisocyanate, a biuret type of hexamethylenediisocyanate, a nurate type of hexamethylenediisocyanate, an adduct of hexamethylenediisocyanate, or a allophanate type of hexamethylenediisocyanate, or a combination thereof.

11. The hard-coating film of claim 10, wherein in the active energy ray curable composition, a composition ratio (mole ratio) of the hydroxy group of the (meth)acrylate polymer (A) and an isocyanate group of the isocyanate compound (B) is 1/0.05 to 1/1.40.

12. The hard-coating film of claim 1, wherein the active energy ray curable resin composition further includes (meth)acrylate (C) in addition to the (meth)acrylate polymer (A).

13. The hard-coating film of claim 12, wherein the (meth)acrylate polymer (A) and the (meth)acrylate (C) are included in a weight ratio of 60:40 to 40:60.

14. The hard-coating film of claim 12, wherein the isocyanate compound (B) is included in an amount of 0.1 to 30 parts by weight based on 100 parts by weight of a sum of the (meth)acrylate polymer (A) and the (meth)acrylate (C).

15. The hard-coating film of claim 1, wherein the hard-coating layer includes two or more layers having the same or different compositions.

16. The hard-coating film of claim 1, wherein the hard-coating film for a display device has stress energy of at least 1400 kJ/m³ in a stress-strain curve measured according to ASTM D882.

17. The hard-coating film of claim 1, wherein the nano-sized inorganic particle includes include silica, alumina, zirconia, titania, barium titanate, antimony trioxide, or a combination thereof.

18. The hard-coating film of claim 1, wherein the hard-coating film has a pencil hardness of at least 7H as measured by ASTM D3363 under a weight of 1 kg and flexibility of a radius of curvature of 10 mm or less.

19. The hard-coating film of claim 1, wherein the hard-coating film has a whole thickness of 250 µm or less, a total light transmittance of at least 80 % in a wavelength region of 380-780 nm, a yellow index of 5 or less, and a haze of 2 % or less.

20. The hard-coating film of claim 19, wherein the hard-coating film for a display device has stress energy of at least 1500 kJ/m³ in a stress-strain curve measured according to ASTM D882.

21. A display device, comprising
a display panel;
the hard-coating film of claim 1 disposed on the display panel; and
an adhesive layer coated on at least one surface of the hard-coating film.
